# EUROPÄISCHE PATENTSCHRIFT

(11) **EP 2 724 790 B1**
(45) Veröffentlichungstag und Bekanntmachung des Hinweises auf die Patenterteilung: **22.07.2015**
(21) Anmeldenummer: 13185154.5
(22) Anmeldetag: 19.09.2013
(51) Int. Cl.: B07C 5/36, B65G 47/82

(54) **Verfahren zum Aussondern eines Gegenstands**
Method for rejecting an object
Procédé de séparation d'un objet

(30) Priorität: 25.10.2012 DE 102012219566
(43) Veröffentlichungstag der Anmeldung: 30.04.2014
(73) Patentinhaber: Krones AG, 93073 Neutraubling (DE)
(72) Erfinder: Gut, Thorsten, 93073 Neutraubling (DE)
(74) Vertreter: Grünecker Patent- und Rechtsanwälte PartG mbB

(56) Entgegenhaltungen:
- EP-A2- 2 407 846
- WO-A1-99/20551
- WO-A1-03/022717

## Beschreibung

Die Erfindung betrifft ein Verfahren zum Aussondern eines Gegenstands, insbesondere einer Flasche, aus einer Abfolge von Gegenständen mittels eines Pushers von einem Förderband.

Bekanntermaßen können fehlerhafte Produkte aus einem auf einem Förderband transportierten Produktstrom mittels sogenannter Pusher in Richtung wenigstens einer Ausleitbahn ausgesondert werden, wie beispielsweise in der DE 10 2010 031298 A1 beschrieben ist. Demnach kann durch Überwachen einer belastungsabhängigen Größe des Pusher die erfolgreiche Ausleitung eines Gegenstands auf eine Ausleitbahn überprüft werden.

Nichtsdestoweniger werden die Gegenstände, beispielsweise Flaschen, aus Gründen der Handhabung mit einem seitlichen Spiel zu eingangsseitigen Führungsgeländern oder dergleichen zugeführt, so dass die Gegenstände auch am Pusher einen unterschiedlichen seitlichen Versatz aufweisen, der bei herkömmlichen Ausleitsystemen beispielsweise 10 mm betragen kann. Da die nominellen Ausleithübe der Pusher im Bereich von 5 bis 15 mm liegen können, kann es vorkommen, dass je nach seitlichem Versatz des auszusondernden Gegenstands ein für das Ausleiten in die gewünschte Ausleitbahn unzureichender Hub ausgeführt wird, oder aber, dass ein zu großer Hub ausgeführt wird, und der Gegenstand beispielsweise gegen ein Begrenzungsgeländer gedrückt und dabei beschädigt wird. Ebenso ist Verklemmen einzelner Gegenstände im Bereich des Ausleitsystems möglich. Es besteht somit das grundsätzliche Problem, trotz des unterschiedlichen seitlichen Versatzes, eine zuverlässiges und schonendes Aussondern bei möglichst geringen nominellen Ausleithüben zu gewährleisten.

Hierzu schlägt beispielsweise die WO 99/20551 A1 vor, stromaufwärts eines Pushers eine Lichtschrankenanordnung quer zur Förderrichtung der auszuleitenden Gegenstände vorzusehen. Dies verursacht jedoch einen erheblichen apparativen Aufwand und gewährleistet bei eng aneinander stehenden Gegenständen keine zuverlässige Erkennung des jeweiligen seitlichen Versatzes.

Es besteht somit der Bedarf für ein Verfahren zum Aussondern eines Gegenstands aus einer Abfolge von transportierten Gegenständen, bei dem die vorstehend genannten Probleme mit geringem apparativen Aufwand, Platz sparend und bei hoher Betriebssicherheit beseitigt oder zumindest abgemildert werden können.

Die gestellte Aufgabe wird mit einem Verfahren nach Anspruch 1 gelöst. Demnach wird ein Mess-Signal zum Feststellen eines Erstkontakts zwischen dem Pusher und dem auszusondernden Gegenstand überwacht. Der Gegenstand ist insbesondere eine Flasche, ein Behälter, ein Gebinde oder ein Packstück. Ferner führt der Pusher ausgehend von dem Erstkontakt einen Soll-Hub aus. Unter dem Erstkontakt ist hierbei das Herstellen des Kontakts zwischen dem Gegenstand und einem an dem Pusher vorgesehen Stößel, einer Pusherplatte oder dergleichen zu verstehen. Es versteht sich, dass der erfindungsgemäße Erstkontakt während eines Vorschubs des Pushers in Richtung auf den Gegenstand hergestellt wird.

Der Gegenstand lässt sich somit gezielt in Richtung einer bestimmten Ausleitbahn oder dergleichen schieben. Anders gesagt kann ein Blindhub des Pushers, also ein Hub, den der Pusher ausführt, bevor der Erstkontakt mit dem Gegenstand hergestellt wird, für den Ausleitvorgang vernachlässigt werden.

Das erfindungsgemäße Mess-Signal wird im Bereich des Pushers abgegriffen. Der Kontakt zwischen dem Stößel und dem Gegenstand kann beispielsweise durch Überwachen einer oder mehrerer Kenngrößen des Pushers erfolgen. Denkbar wären auch zusätzliche Drucksensoren am Stößel oder einer an dem Stößel vorgesehenen Pusherplatte oder dergleichen. Mess-Signale derartiger Drucksensoren könnten im Bereich des Pushers abgegriffen werden und erübrigen Lichtschranken oder dergleichen zum Messen eines seitlichen Versatzes der einlaufenden Gegenstände.

Vorzugsweise wird ein Gesamthub zum Aussondern des Gegenstands ausgehend von einer Ruheposition des Pushers zum Durchleiten der Abfolge von Gegenständen individuell für den Gegenstand ermittelt. Somit kann jeder Gegenstand unabhängig von seinem seitlichen Versatz mittels des gleichen Soll-Hubs auf eine Ausleitbahn oder dergleichen geschoben werden.

Vorzugsweise wird das Mess-Signal wenigstens innerhalb eines Blind-Hubs des Pushers in Richtung auf den Gegenstand periodisch registriert. Dadurch kann der Erstkontakt zuverlässig und mit ausreichender Schnelligkeit automatisch erkannt werden.

Vorzugsweise wird der Erstkontakt unter kontinuierlichem Vorschub des Pushers festgestellt. Dadurch lässt sich eine Belastung des Pushers durch einen von dem auszusondernden Gegenstand entgegen gebrachten Widerstand besonders zuverlässig identifizieren und dem Erstkontakt zuordnen. Außerdem lassen sich Fehler aufgrund von Antriebsspiel minimieren.

Verfahren nach wenigstens einem der vorigen Ansprüche, wobei das Mess-Signal ein Ist-Wert des Pushers ist, der für die Position oder die Bewegung eines an dem Pusher vorgesehen Stößels oder für einen dem Stößel entgegengebrachten Widerstand charakteristisch ist.

Die Position des Stößels könnte beispielsweise von einem an dem Pusher intern oder extern vorgesehenen Positionsgeber gemessen werden. Die Bewegung des Stößels könnte beispielsweise durch Messung der Geschwindigkeit und/oder Beschleunigung des Stößels mittels Positionsgeber, Beschleunigungssensoren oder dergleichen überwacht werden. Ein dem Stößel entgegengebrachter Widerstand spiegelt sich beispielsweise in Antriebsmomenten, der Stromaufnahme des an dem Pusher vorgesehenen Antriebs oder dergleichen wider. Auch ein zusätzlicher Drucksensor im Bereich des Stößels oder einer an dem Stößel vorgesehenen Pusherplatte könnte ein Mess-Signal liefern, das ein Maß für den den Stößel entgegengebrachten Widerstand ist.

Vorzugsweise wird der Verlauf des Ist-Werts mit dem Verlauf eines Soll-Werts verglichen. Die Verläufe des Ist-Werts und des Soll-Werts sind insbesondere im Sinne von Positions-Zeit-Diagrammen und/oder einer Positions-Zeit-Tabellen zu verstehen. Durch einen derartigen Vergleich lässt sich ein belastungsabhängiger Unterschied zwischen Ist-Werten und Soll-Werten ermitteln. Da das Herstellen des Kontakts zwischen dem Stößel und dem Gegenstand für das Ausfahren des Stößels eine belastungsabhängige Zustandsänderung bedeutet, lässt sich aus dem Vergleich des zeitlichen Verlaufs des Ist-Werts mit dem zeitlichen Verlauf des Soll-Werts eine derartige Zustandsänderung erkennen, gleichbedeutend mit dem Herstellen des Kontakts.

Vorzugsweise wird der Verlauf des Soll-Werts in Abhängigkeit von einer Abmessung und/oder der Masse des Gegenstands vorgegeben. Der Verlauf des Soll-Werts ist insbesondere im Sinne eines Positions-Zeit-Diagramms und/oder einer Positions-Zeit-Tabelle zu verstehen. Dies ermöglicht eine sortentypische Anpassung des Verfahrens. Beispielsweise kann ein erwarteter Verlauf des Soll-Werts an einen bestimmten Flaschentyp angepasst werden. Dies könnte beispielsweise ein bestimmter Bereich des Vorschubs des Pushers sein, indem ein charakteristischer Verlauf des Mess-Signals erwartet wird. Ebenso denkbar wären bestimmte belastungsabhängige Änderungen des Mess-Signals bei unterschiedlich schweren Gegenständen. Der Soll-Wertverlauf könnte beispielsweise eine charakteristische Änderung der nominellen Stromaufnahme des Pusherantriebs während eines Blindhubs und während eines Ausschiebens des Gegenstands umfassen.

Vorzugsweise werden aus zeitlichen korrespondierenden Ist-Werten und Soll-Werten Differenzwerte errechnet. Anders gesagt wird die Ist-Position des Stößels während des Vorschubs mit einer Soll-Positionskurve und/oder Soll-Positionstabelle verglichen. Dies ermöglicht eine besonders einfache Auswertung der Vergleichsergebnisse.

Vorzugsweise werden die Differenzwerte mit wenigstens einem Schwellenwert verglichen, der charakteristisch für das Herstellen des Erstkontakts zwischen dem Stößel und dem Gegenstand ist. Mit dem Erreichen oder Überschreiten eines Schwellenwerts lässt sich auf einfache und zuverlässige Weise der Beginn des Soll-Hubs auslösen.

Vorzugsweise wird aus dem Mess-Signal ein Schleppfehler zwischen einer Soll-Position des Stößels und einer Ist-Position des Stößels berechnet. Unter dem Schleppfehler ist ein regelungstechnisch bedingtes Nachlaufen der Ist-Position gegenüber der Soll-Position zu verstehen. Der Schleppfehler erhöht sich auf charakteristische Weise bei einem stufenartigen Ansteigen des dem Stößel entgegengebrachten Widerstands.

Vorzugsweise sind die Gegenstände Glasflaschen, befüllte Kunststoffflaschen oder Getränkedosen. Derartige Flaschen eignen sich aufgrund ihrer Masse besonders gut zum Erkennen des Kontakts mittels der erfindungsgemäßen Überwachung wenigstens eines Mess-Signals. Beispielsweise ändern sich Schleppfehler, Antriebsmomente oder dergleichen bei schweren Gegenständen besonders stark, wodurch sich das Herstellen des Kontakts zwischen dem Pusher und dem Gegenstand besonders zuverlässig erkennen lässt.

Vorzugsweise wird der Pusher von einem positionsgeregelten Linearmotor angetrieben. Das Mess-Signal ist dann insbesondere ein Positionssignal des Linearmotors und/oder repräsentiert eine elektrische Antriebsleistung des Linearmotors. Mit einer derartigen Konfiguration lässt sich sowohl der Pusher besonders einfach und genau antreiben als auch charakteristische Schwankungen des Mess-Signals beim Herstellen des Kontakts unmittelbar und zuverlässig erfassen.

Vorzugsweise wird das Mess-Signal periodisch wiederholt ausgewertet, und der Start des SollHubs wird innerhalb von höchstens 2 ms nach Feststellen des Erstkontakts ausgelöst. Dadurch lässt sich der Einfluss des Blindhubs auf den Gesamthub vernachlässigen.

Beispielsweise kann für den nominellen Abstand der Gegenstände vom Pusher eine Schwankungsbreite von ±2 mm, insbesondere ±5 mm, problemlos zugelassen werden. Dies ermöglicht eine Zuförderung der Gegenstände, insbesondere von Flaschen, mit ausreichendem Spiel zu Führungsgeländern oder dergleichen.

Eine bevorzugte Ausführungsform der Erfindung ist in der Zeichnung dargestellt. Es zeigen:
- Fig. 1: ein Ausleitsystem für Gegenstände zum Durchführen des erfindungsgemäßen Verfahrens;
- Fig. 2: einen zeitlichen Verlauf eines Ist-Werts, eines Soll-Werts und einer daraus berechneten Kenngröße;
- Fig. 3: den zeitlichen Verlauf erfindungsgemäßer Größen beim Auslösen eines Sollhubs; und
- Fig. 4: ein schematisches Ablaufdiagramm des erfindungsgemäßen Verfahrens.

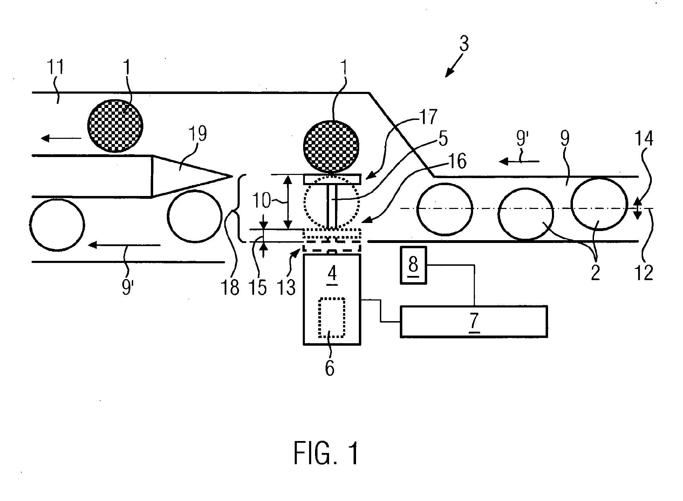

Wie die Fig. 1 erkennen lässt, umfasst ein zum erfindungsgemäßen Aussondern von Gegenständen 1 aus einer Abfolge 2 von transportierten Gegenständen, beispielsweise Flaschen, geeignetes Ausleitsystem 3 in an sich bekannter Weise einen Pusher 4 mit einem in Richtung der vorbeilaufenden Gegenstände 1 beweglichen Stößel 5, an dem beispielsweise eine Pusherplatte oder dergleichen vorgesehen sein kann. Der Pusher 4 umfasst ferner einen elektrisch ansteuerbaren Linearmotor 6, der mit einer Steuereinrichtung 7 verbunden ist. Prinzipiell wären auch andere elektronisch steuerbare Antriebe für den Pusher 4 denkbar. Die Steuereinrichtung 7 ist vorzugsweise ferner mit einer Lichtschranke 8 oder dergleichen zum Identifizieren der auszusondernden Gegenstände 1 verbunden.

Die Abfolge 2 von Gegenständen läuft auf einem Förderband 9 stehend in Förderrichtung 9' an dem Pusher 4 vorbei, so dass beispielsweise als fehlerhaft erkannte Gegenstände 1 durch einen vorgegebenen Sollhub 10 in Richtung wenigstens eines Ausleitbands 11 geschoben und damit ausgesondert werden können.

Auf dem einlaufenden Förderband 9 ist aus Gründen der Handhabung der Gegenstände beim Transport ein seitlicher Versatz von einer gedachten Mittelposition 12 der Gegenstände, beispielsweise zwischen an dem Förderband 9 vorgesehenen Führungsgeländern, üblich. Aus diesem Grund laufen die Gegenstände an dem in eine Ruheposition 13 zurückgezogenen Stößel 5 in einem nominellen Abstand vorbei, der je nach dem zugelassenen seitlichen Versatz der Gegenstände auf dem Förderband 9 eine Schwankungsbreite 14 aufweist.

Erfindungsgemäß wird der Stößel 5 aus seiner gestrichelt gezeichneten Ruheposition 13 über einen Blindhub 15 gegen den auszusondernden Gegenstand 1 gefahren bis in eine gepunktet gezeichnete Kontaktposition 16. Diese ist erfindungsgemäß dadurch definiert, dass an ihr eine Berührung zwischen dem Stößel 5 und dem an dieser Stelle ebenfalls gepunktet gezeichneten Gegenstand 1 festgestellt wird. Das Herstellen des Kontakts wird mit Hilfe wenigstens eines, nachfolgend noch ausführlich erläuterten Mess-Signals erkannt. Ausgelöst von dieser Kontakterkennung führt der Stößel 5 den nominellen Sollhub 10 aus. Am Ende des Sollhubs 10 hat der Stößel 5 seine Endposition 17 zum Aussondern des jeweiligen Gegenstands 1 erreicht.

Somit wird der Gesamthub 18 des Stößels 5 zum Aussondern der Gegenstände 1 als Summe des Sollhubs 10 und des Blindhubs 15 für jeden auszusondernden Gegenstand 1 individuell eingestellt und/oder korrigiert.

Um den für das Aussondern nötigen Sollhub 10 zu reduzieren, kann beispielsweise ein lediglich schematisch angedeuteter Umlenkkeil 19 stromabwärts des Pushers 4 vorgesehen sein. Es lassen sich dann auch Sollhübe 10 verwenden, die kleiner sind als der Durchmesser der auszusondernden Gegenstände 1.

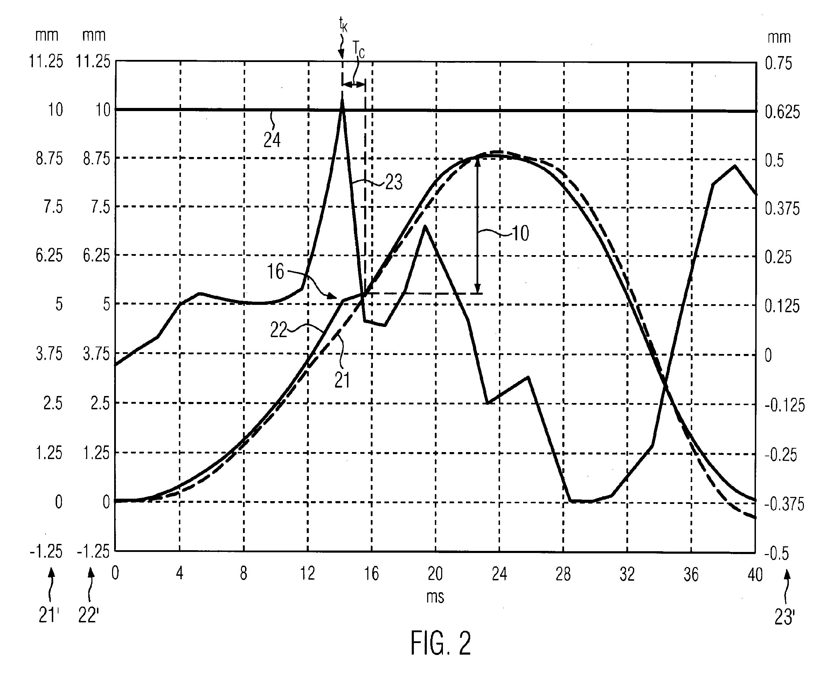

In der Fig. 2 ist ein Beispiel für den zeitlichen Verlauf der Ist-Position des Stößels 5 vor, während und nach dem Herstellen des Erstkontakts mit einem auszuleitenden Gegenstand 1 dargestellt. Der zeitliche Verlauf des Ist-Werts 21 der Stößelposition ist hierbei als gestrichelte Linie, der zeitliche Verlauf eines Soll-Werts 22 der Stößelposition als durchgezogene Linie gezeichnet. Die zugehörigen Ordinatenmaßstäbe 21', 22' sind auf der linken Seite der Fig. 2 ersichtlich. In einem dem gegenüber vergrößerten Ordinatenmaßstab 23' ist ferner der zeitliche Verlauf eines Differenzwerts 23 dargestellt, der die Abweichung des Ist-Werts 21 vom Soll-Wert 22 angibt. Für elektronisch geregelte Linearmotoren 6 wird dieses Nachlaufen des Ist-Werts bekanntermaßen auch als Schleppfehler bezeichnet.

Gezeigt ist ferner ein Schwellenwert 24, der als Vergleichswert für den Differenzwert 23 dient, um das Herstellen des Kontakts des Stößels 5 mit dem Gegenstand 1 festzustellen. Der Kurvenverlauf an der Kontaktposition 16 ist zum besseren Verständnis ebenfalls angedeutet. Auf der Abszisse ist die Zeit in Millisekunden angegeben. Im Beispiel wird der Erstkontakt zu einem Zeitpunkt t_{K} festgestellt und der weitere Vorschub um den Sollhub 10 innerhalb einer Zeitdauer T_{c}, die zur Berechnung der Endposition 17 benötigt wird, ausgelöst. Vorzugsweise wird der Sollhub 10 schnellstmöglich nach Feststellen des Erstkontakts ausgelöst, also lediglich durch die für die Berechnung der Endposition 17 unter Berücksichtigung des jeweils vorliegenden Blindhubs 15 benötigte Prozesszeit verzögert.

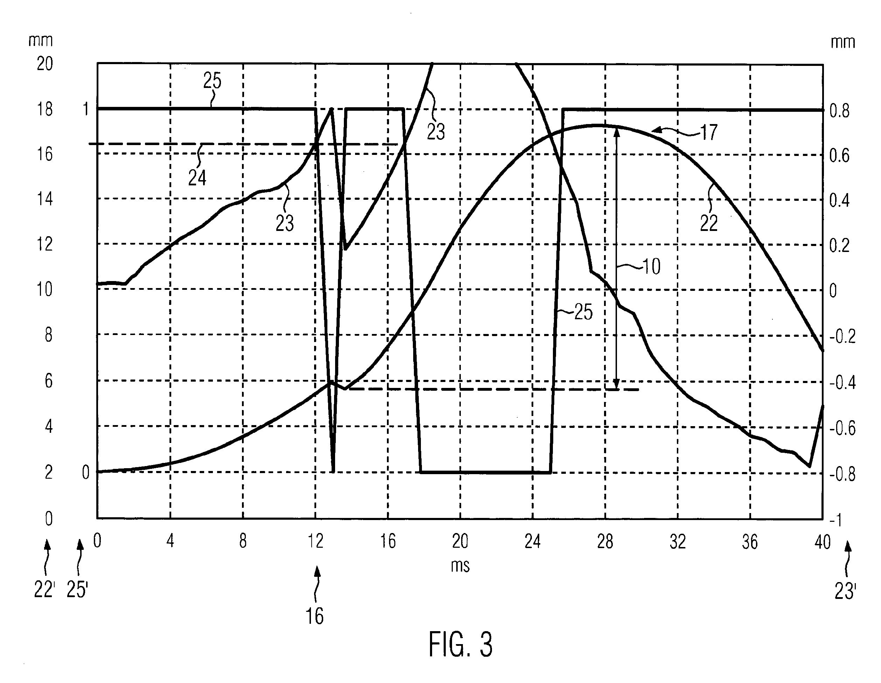

Das erfindungsgemäße Auslösen des Soll-Hubs 10 ist in der Fig. 3 dargestellt. Demnach ändert sich ein Logikpegel 25, wenn der Differenzwert 23 den vorgegebenen Schwellenwert 24 erreicht. Dadurch wird der Erstkontakt des Stößels 5 mit dem Gegenstand 1 festgestellt und der Logikpegel 25 geändert (zugehöriger Ordinatenmaßstab mit 25' bezeichnet). Dieser dient als Triggersignal für das Ausfahren des Stößels 5 um den Sollhub 10 bis in seine Endposition 17. Der Schwellenwert 24 repräsentiert hierbei einen für das Herstellen des Kontakts charakteristischen Werts des Schleppfehlers bzw. des Differenzwerts 23. Wie die Beispiele in Fig. 2 und Fig. 3 verdeutlichen, erfolgt die erfindungsgemäße Erkennung des Erstkontakts und das Auslösen des Soll-Hubs vorzugsweise innerhalb von 2 ms, insbesondere innerhalb 1 ms.

An Stelle des gezeigten Beispiels könnten auch andere charakteristische Mess-Signalschwankungen zum Erkennen der erfindungsgemäßen erstmaligen Berührung des auszusondernden Gegenstands verwendet werden. Denkbar wären beispielsweise eine bestimmte Leistungsaufnahme des an dem Pusher 4 vorgesehenen Antriebs. Beispielsweise könnte die Stromaufnahme des Linearmotors 6 überwacht werden. Das Überschreiten eines zugeordneten Schwellenwerts lässt dann darauf schließen, dass der dem Pusher 4 von dem Gegenstand 1 entgegengebrachte Widerstand verantwortlich für den Anstieg der Stromaufnahme des Linearmotors 6 ist. Ebenso könnten charakteristische Stromverlaufkurven ermittelt werden und als Referenz für eine beim Ausfahren des Stößels 5 gemessene Ist-Stromkurve dienen. Auch könnten Geschwindigkeitswerte oder Beschleunigungswerte des Stößels 5 als Kriterien für das Erkennen des Erstkontakts prinzipiell verwendet werden. Denkbar wären ferner zusätzliche Drucksensoren (nicht gezeigt) am Stößel 5 oder an einer an dem Stößel 5 vorgesehenen Pusherplatte.

Die bezüglich des Schleppfehlers beschriebene Ausführungsform hat dem gegenüber jedoch den Vorteil, dass sich Mess-Signale, die aufgrund der elektronischen Regelung des Linearmotors 6 ohnehin verfügbar sind, zusätzlich für die erfindungsgemäße Erkennung des Erstkontakts verwendet lassen. Die gemessene Ist-Stromaufnahme des Linearmotors 6 ließe sich hierbei in analoger Weise zum gezeigten Beispiel mit Soll-Werten der Stromaufnahme vergleichen und in Form von Differenzkurven, durch einen Vergleich mit Schwellenwerten, oder dergleichen auswerten.

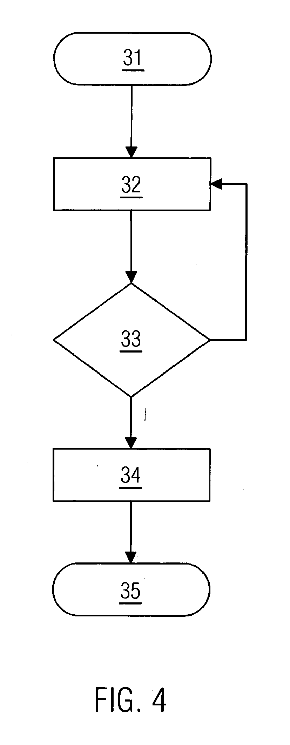

In der Fig. 4 ist ein bevorzugter Verfahrensablauf schematisch dargestellt. Nach Identifizierung eines auszusondernden Gegenstands 1 in einem Schritt 31 wird der Pusher 4 in einem Schritt 32 ausgehend von seiner Ruheposition 13 ausgefahren. Während des Ausfahrens des Stößels 5 wird laufend wenigstens ein erfindungsgemäßes Mess-Signal, beispielsweise der Ist-Wert 21 der Stößelposition registriert.

In einem unmittelbar daran anschließenden Berechnungs- und Vergleichsschritt 33 wird beispielsweise anhand der in der Fig. 2, 3 gezeigten Signale überprüft, ob ein Erstkontakt zwischen dem Stößel 5 und dem Gegenstand 1 hergestellt worden ist. Wird ein derartiger Kontakt nicht festgestellt, wird erneut der Schritt 32 ausgeführt. Wird dagegen ein Kontakt festgestellt, wird während des fortgesetzten Ausfahrens des Stößels 5 in einem Schritt 34 ein Steuersignal ausgelöst, wonach ausgehend von dem festgestellten Erstkontakt der Soll-Hub 10 ausgeführt wird. Im Schritt 35 endet der Vorschub des Pushers 4 mit Erreichen der Endposition 17, entsprechend einer Soll-Position zum Aussondern des Gegenstands 1. Die Schritte 32 bis 34 werden dabei während des fortlaufenden Vorschubs des Stößels 5 ausgeführt.

Sowohl ein Anstieg des Schleppfehlers als auch ein Anstieg der Stromaufnahme des Pushers 4 repräsentieren belastungsabhängige Mess-Signale. Der Signalanstieg wird jeweils durch einen dem Stößel 5 beim Vorschub entgegengebrachten mechanischen Widerstand verursacht. Entsprechend eignet sich das erfindungsgemäße Verfahren insbesondere für Glasflaschen, für befüllte Kunststoffflaschen, oder dergleichen, die dem Pusher aufgrund ihrer Massenträgheit einen ausreichend großen Widerstand entgegensetzen.

Sowohl das erfindungsgemäße Erkennen des Erstkontakts zwischen dem Stößel 5 und dem auszusondernden Gegenstand 1 als auch der anschließend ausgeführte Sollhub 10 lassen sich sortentypisch anpassen. Beispielsweise könnten bei Behältern oder dergleichen mit vergleichsweise kleinem Durchmesser größere Schwankungsbreiten 12 des Förderabstands vorliegen. Ebenso ließe sich der Sollhub 10 beispielsweise an größere Behälterdurchmesser anpassen, um zu vermeiden, dass ein derartiger Behälter gegen ein Begrenzungsgeländer am Ende des Hubs gedrückt würde.

Die aussondernden Gegenstände 1 sind insbesondere Flaschen für Produkte aus dem Lebensmittelbereich, der Pharmazie, Kosmetik, Hygiene oder dergleichen. Ebenso denkbar wären Testkörper, die beispielsweise im Rahmen von Routineuntersuchungen in Abfüllanlagen eingesetzt werden und gezielt aus dem Produktstrom ausgesondert werden müssen.

Das beschriebene Verfahren eignet sich prinzipiell für unterschiedlichste Pusher, unabhängig davon, ob diese beispielsweise einen internen Antrieb, einen externen Antrieb, interne oderexterne Weggeber, einen linearen Hubmechanismus oder einen Schwenkmechanismus umfassen, oder dergleichen.

Erfindungswesentlich ist, dass ein Herstellen des Erstkontakts zwischen dem jeweiligen Pusher und dem auszusondernden Gegenstand messtechnisch erkannt wird, und dass der Sollhub ausgehend von dem erkannten Erstkontakts ausgeführt wird. Somit lassen sich Fehler durch variierende Blindhübe für einzelne Gegenstände vermeiden oder zumindest auf ein vernachlässigbares Maß reduzieren Der jeweilige Ausleithub wird somit individuell für jeden einzelnen auszusondernden Gegenstand bestimmt und/oder korrigiert.

## Patentansprüche

1. Verfahren zum Aussondern eines Gegenstands (1), insbesondere einer Flasche, aus einer Abfolge (2) von Gegenständen mittels eines Pushers (4) von einem Förderband (9), wobei ein Mess-Signal zum Feststellen eines Erstkontakts zwischen dem Pusher und dem auszusondernden Gegenstand überwacht wird und der Pusher ausgehend von dem Erstkontakt einen Soll-Hub (10) ausführt.

2. Verfahren nach Anspruch 1, wobei ein Gesamthub (18) zum Aussondern des Gegenstands (1) ausgehend von einer Ruheposition (13) des Pushers (4) zum Durchleiten der Abfolge (2) von Gegenständen individuell für den Gegenstand (1) ermittelt wird.

3. Verfahren nach Anspruch 1 oder 2, wobei das Mess-Signal wenigstens innerhalb eines Blind-Hubs (15) des Pushers (4) in Richtung auf den Gegenstand (1) periodisch registriert wird.

4. Verfahren nach wenigstens einem der vorigen Ansprüche, wobei der Erstkontakt unter kontinuierlichem Vorschub des Pushers (4) festgestellt wird.

5. Verfahren nach wenigstens einem der vorigen Ansprüche, wobei das Mess-Signal ein Ist-Wert (21) des Pushers (4) ist, der für die Position oder die Bewegung eines an dem Pusher vorgesehen Stößels (5) oder für einen dem Stößel entgegengebrachten Widerstand charakteristisch ist.

6. Verfahren nach Anspruch 5, wobei der Verlauf des Ist-Werts (21) mit dem Verlauf eines Soll-Werts (22) verglichen wird.

7. Verfahren nach Anspruch 6, wobei der Verlauf des Soll-Werts (22) in Abhängigkeit von einer Abmessung und/oder der Masse des Gegenstands (1) vorgegeben wird.

8. Verfahren nach Anspruch 6 oder 7, wobei aus zeitlich korrespondierenden Ist-Werten (21) und Soll-Werten (22) Differenzwerte (23) errechnet werden.

9. Verfahren nach Anspruch 8, wobei die Differenzwerte (23) mit wenigstens einem Schwellenwert (24) verglichen werden, der charakteristisch für das Herstellen des Erstkontakts zwischen dem Stößel (5) und dem Gegenstand (1) ist.

10. Verfahren nach wenigstens einem der vorigen Ansprüche, wobei aus dem Mess-Signal ein Schleppfehler zwischen einer Soll-Position des Pushers und einer Ist-Position des Pushers berechnet wird.

11. Verfahren nach wenigstens einem der vorigen Ansprüche, wobei der Gegenstand (1) eine Glasflasche oder eine befüllte Kunststoff-Flasche ist.

12. Verfahren nach wenigstens einem der vorigen Ansprüche, wobei der Pusher (4) von einem positionsgeregelten Linearmotor (6) angetrieben wird.

13. Verfahren nach wenigstens einem der vorigen Ansprüche, wobei das Mess-Signal periodisch wiederholt ausgewertet wird und der Start des Soll-Hubs (10) innerhalb von höchstens 2 ms nach Feststellen des Erstkontakts ausgelöst wird.

## Claims

1. A method for rejecting an article (1), particularly a bottle, from a sequence (2) of articles by means of a pusher (4) from a conveyor belt (9), wherein a measurement signal for detecting a first contact between the pusher and the article to be rejected is monitored and the pusher carries out a desired stroke (10), starting from the first contact.

2. The method according to claim 1, wherein a total stroke (18) for rejecting the article (1) starting from an inoperative position (13) of the pusher (4) for passing through the sequence (2) of articles is determined individually for the article (1).

3. The method according to claim 1 or 2, wherein the measurement signal is periodically recorded at least within a blind stroke (15) of the pusher (4) towards the article (1).

4. The method according to at least one of the preceding claims, wherein the first contact is detected during the continuous advance movement of the pusher (4).

5. The method according to at least one of the preceding claims, wherein the measurement signal is an actual value (21) of the pusher (4) which is typical of the position or the movement of a plunger (5) provided on the pusher or of a resistance put up against the plunger.

6. The method according to claim 5, wherein the actual value (21) curve is compared with the curve of a desired value (22).

7. The method according to claim 6, wherein the desired value (22) curve is predetermined in response to a dimension and/or the mass of the article (1).

8. The method according to claim 6 or 7, wherein differential values (23) are calculated from actual values (21) and desired values (22) corresponding in time.

9. The method according to claim 8, wherein the differential values (23) are compared with at least one threshold value (24) which is typical of the establishment of the first contact between the plunger (5) and the article (1).

10. The method according to at least one of the preceding claims, wherein a drag error between a desired position of the pusher and an actual position of the pusher is calculated from the measurement signal.

11. The method according to at least one of the preceding claims, wherein the article (1) is a glass bottle or a filled plastic bottle.

12. The method according to at least one of the preceding claims, wherein the pusher (4) is driven by a position-controlled linear motor (6).

13. The method according to at least one of the preceding claims, wherein the measurement signal is evaluated at periodically repeated intervals and the start of the desired stroke (10) is initiated within not more than 2 ms after detection of the first contact.

## Revendications

1. Procédé pour exclure un objet (1), notamment une bouteille, d'une suite (2) d'objets, au moyen d'un pousseur (4) à partir d'une bande de transport (9), procédé d'après lequel on surveille un signal de mesure pour déceler un premier contact entre le pousseur et l'objet à exclure, et le pousseur effectue une course de consigne (10) à partir dudit premier contact.

2. Procédé selon la revendication 1, d'après lequel une course totale (18) pour exclure l'objet (1) à partir d'une position de repos (13) du pousseur (4) pour traverser la suite (2) d'objets, est déterminée individuellement pour l'objet (1).

3. Procédé selon la revendication 1 ou la revendication 2, d'après lequel le signal de mesure est enregistré périodiquement au moins à l'intérieur d'une course aveugle (15) du pousseur (4) en direction de l'objet (1).

4. Procédé selon l'une au moins des revendications précédentes, d'après lequel le premier contact est décelé sous une avance continuelle du pousseur (4).

5. Procédé selon l'une au moins des revendications précédentes, d'après lequel le signal de mesure est une valeur réelle (21) du pousseur (4), qui est caractéristique pour la position ou le mouvement d'un poussoir (5) ou pour une résistance s'opposant au poussoir.

6. Procédé selon la revendication 5, d'après lequel l'évolution de la valeur réelle (21) est comparée avec l'évolution d'une valeur de consigne (22).

7. Procédé selon la revendication 6, d'après lequel l'évolution de la valeur de consigne (22) est prescrite en fonction d'une dimension et/ou d'une masse de l'objet (1).

8. Procédé selon la revendication 6 ou la revendication 7, d'après lequel des valeurs de différence (23) sont calculées à partir de valeurs réelles (21) et de valeurs de consigne (22) mutuellement correspondantes dans le temps.

9. Procédé selon la revendication 8, d'après lequel les valeurs de différence (23) sont comparées à au moins une valeur de seuil (24), qui est caractéristique pour l'établissement du premier contact entre le poussoir (5) et l'objet (1).

10. Procédé selon l'une au moins des revendications précédentes, d'après lequel à partir du signal de mesure est calculée une erreur de poursuite entre une position de consigne du pousseur et une position réelle du pousseur.

11. Procédé selon l'une au moins des revendications précédentes, d'après lequel l'objet (1) est une bouteille en verre ou une bouteille en matière plastique, remplie.

12. Procédé selon l'une au moins des revendications précédentes, d'après lequel le pousseur (4) est entraîné par un moteur linéaire (6) régulé en position.

13. Procédé selon l'une au moins des revendications précédentes, d'après lequel le signal de mesure est traité de manière périodiquement répétée, et le démarrage de la course de consigne (10) est déclenché au plus tard 2 ms après avoir décelé le premier contact.
